# EUROPEAN PATENT SPECIFICATION

(11) **EP 2 816 197 B1**
(45) Date of publication and mention of the grant of the patent: **02.08.2017**
(21) Application number: 13763490.3
(22) Date of filing: 12.03.2013
(51) Int. Cl.: F01D 15/08, F01D 17/10, F01K 17/00

(54) **WATER PRESSURE SYSTEM OF STEAM PLANT**
WASSERDRUCKSYSTEM EINES DAMPFKRAFTWERKS
SYSTÈME À PRESSION D'EAU DE CENTRALE VAPEUR

(30) Priority: 23.03.2012 JP 2012067051
(43) Date of publication of application: 24.12.2014
(73) Proprietor: KYB Corporation, Tokyo 105-6111 (JP)
(72) Inventor: YOSHIDA, Futoshi, Tokyo 105-6111 (JP); MIYAKAWA, Shimpei, Tokyo 105-6111 (JP)
(74) Representative: Grünecker Patent- und Rechtsanwälte PartG mbB
(86) International application number: PCT/JP2013/056710
(87) International publication number: WO 2013/141068

(56) References cited:
- JP-A- 2010 261 397

## Description

### TECHNICAL FIELD

The present invention relates to a water hydraulic system for driving a water-hydraulically driven actuator in a steam plant.

### BACKGROUND ART

Conventionally, in a steam plant such as a thermal power plant and a nuclear power plant, a steam turbine is rotated by utilizing steam generated by evaporating water. By arranging a steam adjusting valve on the upstream of the steam turbine and adjusting a flow rate of the steam passing through the steam turbine, the rotation number of the steam turbine is controlled to be constant.

JP2010-261397A discloses an opening and closing device of a steam adjusting valve for controlling opening and closing of the steam adjusting valve by a water-hydraulically driven actuator. In this opening and closing device of the steam adjusting valve, the water-hydraulically driven actuator is driven by pressurized water discharged from a water hydraulic pump to be driven by rotation of a steam turbine.

### SUMMARY OF INVENTION

However, in the opening and closing device of the steam adjusting valve described in JP2010-261397A, condensate returned from the steam turbine to a steam condenser has a high temperature. In order to supply the condensate to the water hydraulic pump, there was a need for separately providing a cooling device for cooling the condensate. Therefore, there was a fear that an energy loss due to a temperature difference at the time of cooling the condensate was generated.

The present invention is achieved in consideration with the above problem, and an object thereof is to make condensate be supplied to a water hydraulic pump and to improve energy efficiency of a steam plant.

According to one aspect of this invention, a water hydraulic system to be used in a steam plant including: a steam generator for evaporating water supplied through a water feed passage and generating steam; a steam turbine to be rotated by the steam generated in the steam generator, for generating motive power; and a steam condenser for returning the steam passing through the steam turbine to the water feed passage as condensate is provided. The water hydraulic system of the steam plant includes: a water hydraulic pump to be driven by rotation of the steam turbine, for suctioning the condensate returned from the steam condenser through a suction passage and discharging the condensate; a water-hydraulically driven actuator to be actuated by the pressurized water discharged from the water hydraulic pump, for driving an auxiliary machine of the steam plant; and a heat pump for moving heat of the water flowing through the suction passage to the water flowing through the water feed passage.

The details as well as other features and advantages of this invention are set forth in the remainder of the specification and are shown in the accompanying drawings.

### BRIEF DESCRIPTION OF DRAWINGS

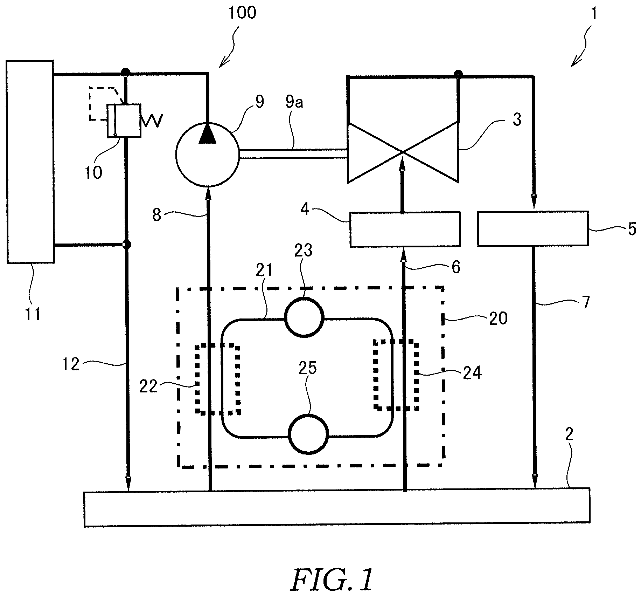

[Fig. 1] Fig. 1 is a water hydraulic circuit diagram of a water hydraulic system of a steam plant according to an embodiment of the present invention.

### DESCRIPTION OF EMBODIMENTS

Hereinafter, referring to Fig. 1, a water hydraulic system 100 of a steam plant according to an embodiment of the present invention will be described.

Firstly, a steam power plant 1 serving as a steam plant to which the water hydraulic system 100 is applied will be described.

The steam power plant 1 includes a water tank 2 capable of storing water, a steam generator 4 for evaporating the water supplied from the water tank 2 and generating steam, a steam turbine 3 to be rotated by the steam generated in the steam generator 4, for generating motive power, and a steam condenser 5 for returning the steam passing through the steam turbine 3 to the water tank 2 as condensate.

The water tank 2 is a tank capable of storing the water to be fed to the steam generator 4, and the water to be suctioned into a water hydraulic pump 9 of the water hydraulic system 100 to be described later. The steam passing through the steam turbine 3 is returned to the water tank 2 from the steam condenser 5 as the condensate.

Similarly, the water discharged from the water hydraulic pump 9 and supplied for driving a water-hydraulically driven actuator 11 to be described later is returned to the water tank 2. In such a way, the water stored in the water tank 2 is used for both the steam power plant 1 and the water hydraulic system 100. It should be noted that without providing the water tank 2, the condensate returned from the steam condenser 5 may be directly supplied to the steam generator 4 and the water hydraulic pump 9.

The steam generator 4 is a boiler for evaporating the water by heat generated when fossil fuel is combusted. The steam generator 4 evaporates the water supplied from the water tank 2 through a water feed passage 6 and generates the steam. The steam generated in the steam generator 4 is sent to the steam turbine 3. In the steam generator 4, in place of thermal power for combusting the fossil fuel, other energy such as nuclear power can also be used.

The steam turbine 3 is rotated by utilizing the steam generated in the steam generator 4. The steam turbine 3 drives and rotates the water hydraulic pump 9 of the water hydraulic system 100 to be described later, the water hydraulic pump being provided on the same axis as a rotation shaft thereof. The steam turbine 3 also drives and rotates a power generator (not shown) together with the water hydraulic pump 9.

The steam condenser 5 cools the steam having a high temperature and generates the condensate. The condensate generated in the steam condenser 5 is returned to the water tank 2 through a condensation passage 7. The condensate returned to the water tank 2 maintains a relatively high temperature even after being cooled in the steam condenser 5.

Next, a configuration of the water hydraulic system 100 will be described.

The water hydraulic system 100 includes the water hydraulic pump 9 for suctioning the water from the water tank 2 through a suction passage 8 and discharging the water, a pressure control valve 10 for adjusting pressure of the pressurized water discharged from the water hydraulic pump 9, the water-hydraulically driven actuator 11 to be actuated by the pressurized water discharged from the water hydraulic pump 9, and a heat pump 20 for moving heat of the water flowing through the suction passage 8 to the water flowing through the water feed passage 6.

The water hydraulic pump 9 is a rotation pump to be driven by rotation of the steam turbine 3. The water hydraulic pump 9 has a rotation shaft 9a coupled to the rotation shaft of the steam turbine 3. Thereby, the water hydraulic pump 9 is rotated in synchronization with the steam turbine 3.

The pressure control valve 10 is brought into an opened state when the pressure of the pressurized water discharged from the water hydraulic pump 9 exceeds predetermined pressure. The pressure control valve 10 guides a part of the pressurized water discharged from the water hydraulic pump 9 to a return passage 12 and brings the water back to the water tank 2.

The water-hydraulically driven actuator 11 is to drive an auxiliary machine (not shown) of the steam power plant 1. The auxiliary machine to be driven by the water-hydraulically driven actuator 11 is a steam adjusting valve (not shown) provided in the water feed passage 6, for adjusting a steam amount to be supplied to the steam turbine 3. The pressurized water supplied for driving the water-hydraulically driven actuator 11 is returned to the water tank 2 through the return passage 12. It should be noted that other general industrial machinery may be driven by the water-hydraulically driven actuator 11 in place of the steam adjusting valve.

The heat pump 20 includes a circulation passage 21 through which a heat medium is circulated. The heat pump 20 is to move the heat of the water flowing through the suction passage 8 to the water flowing through the water feed passage 6 via the heat medium flowing through the circulation passage 21.

The heat medium is circulated in the circulation passage 21 while being changed between a liquid state and a gas state depending on pressure or a temperature, so as to move the heat. The heat medium is circulated clockwise in the circulation passage 21 in Fig. 1.

The heat pump 20 includes an evaporator 22 for evaporating the heat medium in the circulation passage 21, a compressor 23 for compressing the heat medium in the circulation passage 21 evaporated in the evaporator 22, a condenser 24 for condensing the heat medium in the circulation passage 21 compressed in the compressor 23, and an expander 25 for expanding the heat medium in the circulation passage 21 condensed in the condenser 24 and guiding the heat medium to the evaporator 22.

The evaporator 22 is a heat exchanger for exchanging heat with the water flowing through the suction passage 8. The evaporator 22 absorbs heat from the water flowing through the suction passage 8 and evaporates the heat medium. In the evaporator 22, the water flowing through the suction passage 8 is cooled by utilizing vaporization heat at the time of evaporating the heat medium.

The compressor 23 is a compressor for compressing and bringing the heat medium evaporated in the evaporator 22 into a high-temperature and high-pressure state. The compressor 23 compresses the heat medium in such a manner that the heat medium has a higher temperature than the water flowing through the water feed passage 6.

The condenser 24 is a heat exchanger for exchanging heat with the water flowing through the water feed passage 6. The condenser 24 emits heat to the water flowing through the water feed passage 6 from the heat medium. Thereby, in the condenser 24, the heat medium is cooled by the water flowing through the water feed passage 6 and changed from the gas state to the liquid state.

The expander 25 is a valve for radically expanding the heat medium. The expander 25 brings the heat medium into a low-temperature and low-pressure state by adiabatic expansion. The heat medium brought into the low-temperature and low-pressure state in the expander 25 is guided to the evaporator 22 again.

Next, operations of the steam power plant 1 and the water hydraulic system 100 will be described.

In the steam power plant 1, the water stored in the water tank 2 is supplied to the steam generator 4 and evaporated to be the steam. The steam generated in the steam generator 4 rotates the steam turbine 3 and is guided to the steam condenser 5. At this time, the power generator is driven and rotated by the rotation of the steam turbine 3, so that power generation is performed. In the steam condenser 5, the steam is cooled to become the condensate. This condensate is returned to the water tank 2 through the condensation passage 7.

Meanwhile, the water hydraulic pump 9 suctions the water from the water tank 2 and discharges the water. At this time, the water in the water tank 2 maintains a relatively high temperature by the condensate returned from the steam condenser 5. Thus, the temperature of the water to be suctioned into the water hydraulic pump 9 is lowered by utilizing the heat pump 20.

In the heat pump 20, the heat medium adiabatically expanded in the expander 25 and brought into the low-temperature and low-pressure state absorbs heat from the water flowing through the suction passage 8 and is evaporated in the evaporator 22. The heat medium evaporated in the evaporator 22 is brought into the high-temperature and high-pressure state by the compressor 23, and guided to the condenser 24. In the condenser 24, heat is emitted to the water flowing through the water feed passage 6 from the heat medium.

In such a way, by circulating the heat medium in the circulation passage 21 while changing the heat medium between the liquid state and the gas state depending on the pressure and the temperature, so as to move the heat, the heat pump 20 moves the heat of the water of the suction passage 8 through which the water to be suctioned by the water hydraulic pump 9 flows to the water of the water feed passage 6 through which the water to be supplied to the steam generator 4 flows. Thus, since the water flowing through the suction passage 8 is cooled, the condensate from the steam condenser 5 can be supplied to the water hydraulic pump 9.

Since the water flowing through the water feed passage 6 is heated by movement of heat by the heat pump 20, the water to be supplied to the steam generator 4 can have a higher temperature. Thus, energy required for evaporating the water in the steam generator 4 can be decreased, so that an energy loss due to exhaust heat can be reduced.

Therefore, the condensate can be supplied to the water hydraulic pump 9 and energy efficiency of the steam power plant 1 can be improved.

The pressurized water discharged from the water hydraulic pump 9 is supplied to the water-hydraulically driven actuator 11. The water-hydraulically driven actuator 11 opens and closes the steam adjusting valve for adjusting the steam amount to be supplied to the steam turbine 3 by using the pressurized water discharged from the water hydraulic pump 9. Then, the pressurized water supplied for driving the water-hydraulically driven actuator 11 is returned to the water tank 2 through the return passage 12.

According to the above embodiments, the following effect is obtained.

The heat pump 20 for moving the heat of the water of the suction passage 8 through which the water to be suctioned by the water hydraulic pump 9 flows to the water of the water feed passage 6 through which the water to be supplied to the steam generator 4 flows is provided. Thus, since the water flowing through the suction passage 8 is cooled, the condensate from the steam condenser 5 can be supplied to the water hydraulic pump 9. Also, since the water flowing through the water feed passage 6 is heated by the movement of heat by the heat pump 20, the water to be supplied to the steam generator 4 can have a higher temperature. Thus, the energy required for evaporating the water in the steam generator 4 can be decreased. Therefore, the condensate can be supplied to the water hydraulic pump 9 and the energy efficiency of the steam power plant 1 can be improved.

Embodiments of this invention were described above, but the above embodiments are merely examples of applications of this invention, and the technical scope of this invention is not limited to the specific constitutions of the above embodiments.

For example, in the above embodiment, a case where the water hydraulic system 100 is applied to the steam power plant 1 is described. However, in place of the steam power plant 1, the water hydraulic system 100 may be applied to other steam plants such as ships and production facilities with the rotation of the steam turbine 3 as a power source. In that case, without providing a power generator, only the water hydraulic pump 9 may be driven and rotated by the steam turbine 3.

## Claims

1. A steam plant (1) including:
a steam generator (4) for evaporating water supplied through a water feed passage (6) and generating steam;
a steam turbine (3) to be rotated by the steam generated in the steam generator (4), for generating motive power;
a steam condenser (5) for returning the steam passing through the steam turbine (3) to the water feed passage (6) as condensate, and
a water hydraulic system (100) comprising:
a water hydraulic pump (9) to be driven by rotation of the steam turbine (3), for suctioning the condensate returned from the steam condenser (5) through a suction passage (8) and discharging the condensate; and
a water-hydraulically driven actuator (11) to be actuated by the pressurized water discharged from the water hydraulic pump (9), for driving an auxiliary machine of the steam plant (1);
**characterized by** a heat pump (20) for moving heat of the water flowing through the suction passage (8) to the water flowing through the water feed passage (6).

2. The steam plant (1) according to claim 1, further comprising:
a water tank (2) capable of storing the water to be supplied to the steam generator (3) and the water to be suctioned by the water hydraulic pump (9), the water tank (2) to which the condensate from the steam condenser (5) is returned.

3. The steam plant (1) according to claim 1 or 2, wherein
the heat pump (20) includes a circulation passage (21) through which a heat medium is circulated, and moves the heat of the water of the suction passage (8) to the water of the water feed passage (6) via the heat medium flowing through the circulation passage (21).

4. The steam plant (1) according to claim 3, wherein
the heat pump (20) includes:
an evaporator (22) for exchanging heat with the water flowing through the suction passage (8) and evaporating the heat medium in the circulation passage (21);
a compressor (23) for compressing the heat medium in the circulation passage (21) evaporated in the evaporator (22);
a condenser (24) for exchanging heat with the water flowing through the water feed passage (6) and condensing the heat medium in the circulation passage (21) compressed in the compressor (23); and
an expander (25) for expanding the heat medium in the circulation passage (21) condensed in the condenser (24) and guiding the heat medium to the evaporator (22).

5. The steam plant (1) according to any one of claims 1 to 4, wherein
the auxiliary machine is a steam adjusting valve for adjusting a steam amount to be supplied to the steam turbine (3).

## Patentansprüche

1. Ein Dampfkraftwerk (1), enthaltend:
einen Dampfgenerator (4) für Verdampfen von Wasser, das durch eine Wasserzufuhr-Durchgang (6) zugeführt wurde und Erzeugen von Dampf;
eine Dampfturbine (3) für Erzeugen von Antriebskraft, die durch den Dampf gedreht wird, der in dem Dampfgenerator (4) erzeugt wird;
einen Dampfkondensator (5) für Rückführen des Dampfes, der die Dampfturbine (3) bis dem Wasserzufuhr-Durchgang (6) als Kondensat durchläuft, und
eine Wasserhydraulik (100), umfassend:
eine Wasser-Hydraulikpumpe (9), die durch Rotation der Dampfturbine (3) angetrieben wird, für Absaugen des Kondensats, das von dem Dampfkondensator (5) durch einen Absaug-Durchgang (8) zurückgeführt wird und Ableiten des Kondensats; und
einen wasser-hydraulisch angetriebenen Aktor (11), der durch das unter Druck gesetzte Wasser angetrieben wird, das von der Wasser-Hydraulikpumpe (9) abgeleitet wird, für Antreiben einer Zusatzmaschine des Dampfkraftwerks (1);
ist **gekennzeichnet durch** eine Wärmepumpe (20) für Verschieben der Wärme von dem Wasser, das durch den Absaug-Durchgang (8) fließt zu dem Wasser, das durch den Wasserzufuhr-Durchgang (6) fließt.

2. Das Dampfkraftwerk (1) nach Anspruch 1, ferner umfassen:
einen Wassertank (2), der in der Lage ist, das Wasser, das zu dem Dampfgenerator (3) geführt wird und das Wasser, das durch die Wasser-Hydraulikpumpe (9) abgesaugt wird, zu speichern, der Wassertank (2) zu welchem das Kondensat von dem Dampfkondensator (5) zurückgeführt wird.

3. Das Dampfkraftwerk (1) nach Anspruch 1 oder 2, wobei
die Wärmepumpe (20) einen Zirkulations-Durchgang (21) umfasst, durch welchen ein Wärmemedium zirkuliert ist, und die Wärme des Wassers des Absaug-Durchgangs (8) zu dem Wasser des Wasserzufuhr-Durchgangs (6) durch das Wärmemedium, das durch den Zirkulations-Durchgang (21) fließt, verschiebt.

4. Das Dampfkraftwerk (1) nach Anspruch 3, wobei
die Wärmepumpe (20) enthält:
einen Verdampfer (22) für Austauschen von Wärme mit dem Wasser, das durch den Absaug-Durchgang (8) fließt und Verdampfen des Wärmemediums in dem Zirkulations-Durchgang (21);
einen Kompressor (23) für Komprimieren des Wärmemediums in dem Zirkulations-Durchgang (21), das in dem Verdampfer (22) verdampft ist;
einen Kondensator (24) für Austauschen von Wärme mit dem Wasser, das durch den Wasserzufuhr-Durchgang (6) fließt und Kondensieren des Wärmemediums in dem Zirkulations-Durchgang (21), das in dem Kompressor (23) komprimiert ist; und
einen Expander (25) für Expandieren des Wärmemediums in dem Zirkulations-Durchgang (21), das in dem Kondensator (24) kondensiert ist und Führen des Wärmemediums zu dem Verdampfer (22).

5. Das Dampfkraftwerk (1) nach einem der Ansprüche 1 bis 4, wobei die Zusatzmaschine ein Dampf-Einstellventil zum Einstellen einer Dampfmenge ist, die der Dampfturbine (3) zugeführt wird.

## Revendications

1. Centrale vapeur (1) comprenant:
un générateur de vapeur (4) permettant d'évaporer l'eau fournie à travers un passage d'alimentation en eau (6) et de générer de la vapeur;
une turbine à vapeur (3) actionnée en rotation par la vapeur générée dans le générateur de vapeur (4), afin de générer une force motrice;
un condenseur à vapeur (5) permettant de renvoyer la vapeur traversant la turbine à vapeur (3) vers le passage d'alimentation en eau (6) en tant que condensat, et un système hydraulique à eau (100) comprenant:
une pompe hydraulique à eau (9), entraînée par la rotation de la turbine à vapeur (3), permettant d'aspirer le condensat renvoyé du condenseur à vapeur (5) à travers un passage d'aspiration (8) et pour évacuer le condensat; et
un actionneur entraîné hydrauliquement par de l'eau (11) pour être actionnée par l'eau sous pression évacuée de la pompe hydraulique à eau (9), afin d'entraîner une machine auxiliaire de la centrale vapeur (1);
**caractérisée par** une pompe à chaleur (20) afin de transférer la chaleur de l'eau s'écoulant à travers le passage d'aspiration (8) vers l'eau s'écoulant à travers le passage d'alimentation en eau (6).

2. Centrale vapeur (1) selon la revendication 1, comprenant en outre:
un réservoir d'eau (2) capable de stocker l'eau à fournir au générateur de vapeur (3) et l'eau devant être aspirée par la pompe hydraulique à eau (9), réservoir d'eau (2) vers lequel est retourné le condensat provenant du condenseur à vapeur (5).

3. Centrale vapeur (1) selon la revendication 1 ou 2, dans laquelle
la pompe à chaleur (20) comprend un passage de circulation (21) à travers lequel circule un milieu thermique et transfère la chaleur de l'eau du passage d'aspiration (8) vers l'eau du passage d'alimentation en eau (6) par l'intermédiaire du milieu chauffant s'écoulant à travers le passage de circulation (21).

4. Centrale vapeur (1) selon la revendication 3, dans laquelle la pompe à chaleur (20) inclut:
un évaporateur (22) permettant un échange thermique avec l'eau s'écoulant à travers le passage d'aspiration (8) et l'évaporation du milieu thermique le passage de circulation (21);
un compresseur (23) permettant de comprimer le milieu thermique dans le passage de circulation (21) évaporé dans l'évaporateur (22) ;
un condenseur (24) pour assurer un échange thermique avec l'eau s'écoulant à travers le passage d'alimentation en eau (6) et condenser le milieu thermique dans le passage de circulation (21) comprimé dans le compresseur (23); et
un expanseur (25) permettant de dilater le milieu thermique dans le passage de circulation (21) condensé dans le condenseur (24) et de guider le milieu thermique vers l'évaporateur (22).

5. Centrale vapeur (1) selon l'une quelconque des revendications 1 à 4, dans laquelle
la machine auxiliaire est une soupape de réglage de la vapeur permettant d'ajuster une quantité de vapeur à fournir à la turbine à vapeur (3).
